Europäisches Patentamt

European Patent Office

Office européen des brevets

(11) Veröffentlichungsnummer: **0 319 713 B1**

(19)

(12) **EUROPÄISCHE PATENTSCHRIFT**

(45) Veröffentlichungstag der Patentschrift: **27.05.92**

(21) Anmeldenummer: **88118392.5**

(22) Anmeldetag: **04.11.88**

(51) Int. Cl.5: **B01D 17/02**, B01D 17/022, B01D 17/025

(54) **Koaleszenzabscheider.**

(30) Priorität: **14.11.87 DE 8715165 U**
**30.03.88 DE 8804317 U**
**13.04.88 DE 8804819 U**

(43) Veröffentlichungstag der Anmeldung:
**14.06.89 Patentblatt  89/24**

(45) Bekanntmachung des Hinweises auf die
Patenterteilung:
**27.05.92 Patentblatt  92/22**

(84) Benannte Vertragsstaaten:
**AT BE CH DE ES FR GR IT LI NL**

(56) Entgegenhaltungen:
**EP-A- 0 009 059**
**EP-A- 0 133 986**
**EP-A- 0 264 877**
**DE-U- 8 535 037**
**GB-A- 2 104 791**

(73) Patentinhaber: **ZEISS BETONWAREN GmbH**
**Hohentwielstrasse 3**
**W-7760 Radolfzell(DE)**

(72) Erfinder: **Zeiss, Paul**
**Seestrasse 206a**
**CH-8700 Küsnacht(CH)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**W-7730 VS-Villingen-Schwenningen(DE)**

EP 0 319 713 B1

Rank Xerox (UK) Business Services

## Beschreibung

Die Erfindung betrifft einen Koaleszenzabscheider nach dem Oberbegriff des Anspruchs 1.

Aus DE 85 35 037 U1 ist ein Koaleszenzabscheider dieser Art bekannt, bei dem es schwierig ist, eine ausreichende Aufenthaltszeit der Flüssigkeit im Flüssigkeitsbehälter und im Filter zu erreichen.

Durch die Erfindung soll ein Koaleszenzabscheider der eingangs genannten Art geschaffen werden, der bei geringem Platzbedarf ausreichende Verweilzeit und infolgedessen ausreichende Abscheidung von Leichtflüssigkeiten bei einfacher Reinigung ermöglicht.

Diese Aufgabe wird erfindungsgemäß durch die Merkmale des Anspruchs 1 gelöst.

Beim erfindungsgemäßen Koaleszenzabscheider sind die Eintrittsöffnungen des im übrigen flüssigkeitsdicht ausgebildeten Filtergehäuses in dem von der zuströmenden Flüssigkeit abgewandten Bereich angeordnet, so daß der Strömungsweg der Flüssigkeit im Flüssigkeitsbehälter vergrößert wird. Bei dieser Ausführungsform ist im Filtergehäuse eine weitere Verbindungsöffnung in Höhe von Einlauf und Ablauf des Flüssigkeitsbehälters vorgesehen. Durch die Art der Einleitung der Flüssigkeit an einer vom Einlauf entfernten Stelle des Flüssigkeitsbehälters in die Öffnungen des Filtergehäuses ergibt sich eine sehr lange Aufenthaltszeit der Flüssigkeit im Flüssigkeitsbehälter vor dem Eintritt ins Filter, so daß ein Aufschwimmen der Öl- und Benzintröpfchen zu einer von der zugeführten Flüssigkeit nicht durchflossenen Schicht an der Oberseite des Behälters in ausreichendem Umfang möglich ist. Erst anschließend werden die restlichen Verunreinigungen im Filter beseitigt und können zur Ölschicht aufsteigen. Dies wird durch eine zumindest teilweise, zwangsweise Durchströmung des Filters in Längsrichtung von oben nach unten noch verstärkt. Somit ist auf minimalem Raum eine hervorragende Abscheidung von Leichtflüssigkeiten im Flüssigkeitsbehälter erreichbar.

Die Aufenthaltszeit der Zugeleiteten Flüssigkeit im Flüssigkeitsbehälter läßt sich gemäß Anspruch 2 durch die besondere Führung anschließend an den Einlauf noch erhöhen.

Besonders zweckmäßig gestaltet sich die Reinigung des Filters, wenn das Filtergehäuse gemäß Anspruch 3 ohne weiteres aus einer Halteeinrichtung herausnehmbar ist, wobei sich das Einsetzen gemäß Anspruch 3 besonders einfach durchführen läßt.

Die Ansprüche 4 bis 9 betreffen weitere vorteilhafte Ausgestaltungen der Erfindung.

Bei bekannten Koaleszenzabscheidern kann es infolge vermehrten Leichtflüssigkeitsanfalls im Zulaufwasser oder ungenügender Wartungsintervalle zu einem ungeregelten Anwachsen der Leichtflüssigkeitsschichtdicke kommen, das die Abscheideleistung maßgeblich beeinträchtigt und zwar a) durch eine Verringerung des Wasser- und damit Abscheideraumes und b) durch ein Hineinwachsen der Leichtflüssigkeitsschicht in das Koaleszenzfilter. Eine einwandfreie Funktion des Koaleszenzabscheiders und insbesondere des Koaleszenzfilters ist damit nicht mehr sicher gewährleistet.

Anhand der Figuren werden Ausführungsbeispiele der Erfindung näher erläutert. Es zeigt:

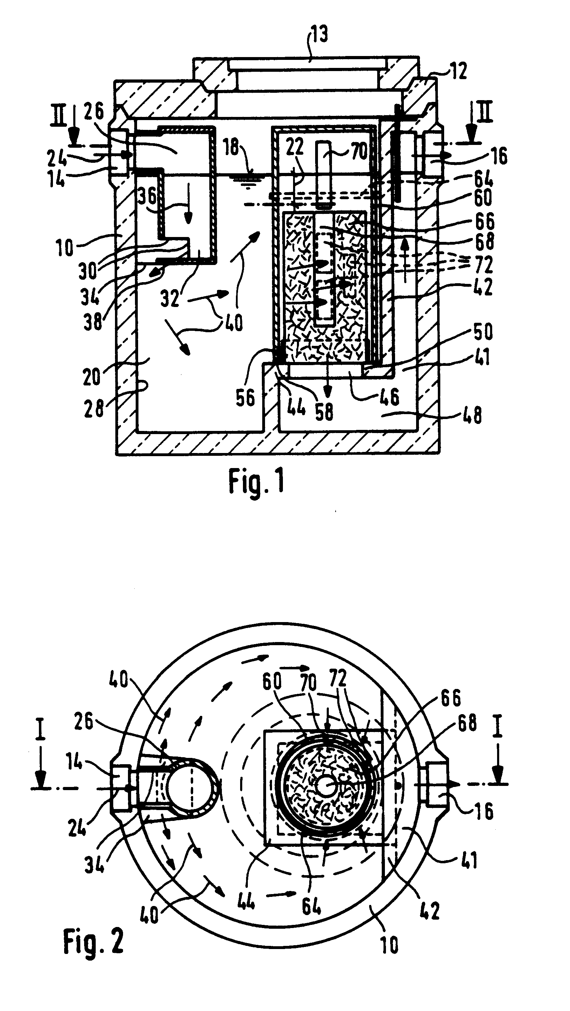

Fig. 1     einen schematischen Vertikalschnitt längs der Linie I-I in Fig. 2 durch den Abscheider nach einer ersten Ausführungsform,

Fig. 2     einen Horizontalschnitt längs der Linie II-II in Fig. 1,

Fig. 3     einen Vertikalschnitt durch den Filterkorb,

Fig. 4     einen Schnitt längs der Linie IV-IV in Fig. 3,

Fig. 5     einen Horizontalschnitt durch einen behälterfesten Auflagering für den Filter gemäß der Linie V-V in Fig. 6, und

Fig. 6     einen Schnitt längs der Linie VI-VI in Fig. 5.

Gleiche oder entsprechende Teile sind in allen Figuren mit den gleichen Bezugszeichen versehen.

Die in den Figuren dargestellte Ausführungsform weist einen im wesentlichen zylindrischen Flüssigkeitsbehälter 10 mit Deckel 12 auf, der im oberen Bereich einen Einlauf 14 und etwa in gleicher Höhe bzw. nur geringfügig darunter auf der gegenüberliegenden Seite des Behälters 10 einen Ablauf 16 besitzt. Der Behälter 10 ist bis zu einem Flüssigkeitsspiegel 18 in Höhe des Ablaufs 16 mit Flüssigkeit 20 gefüllt, wobei sich unterhalb des Flüssigkeitsspiegels 18 eine mehr oder weniger dicke Schicht 22 aus Leichtflüssigkeit während des Betriebes ausbildet.

Die zu reinigende Flüssigkeit wird gemäß dem Pfeil 24 durch den Einlauf 14 zugeführt, an den sich ein vertikal nach unten führender Stutzen 26 anschließt, der an seinem unteren Ende innerhalb der Flüssigkeit 20 eine nach unten und zur nahegelegenen Innenwand 28 des Flüssigkeitsbehälters 10 hinweisende Austrittsöffnung 30 aufweist. Dieses untere Ende 32 des Stutzens 26 ist durch horizontale Streben 34 mit der Innenwand 28 des Behälters 10 verbunden.

Die im Stutzen 26 gemäß dem Pfeil 36 nach unten abgelenkte Flüssigkeit wird gemäß den Pfeilen 38, 40 in einer zunächst nach unten und anschließend horizontal oder leicht nach oben gerichteten, im Behälter kreisförmig abgelenkten Strömung auf die dem Einlauf 14 gegenüberliegende Seite des Behälters 10 geleitet. Auf dieser gegenüberliegenden Seite befindet sich nahe dem Auslaß 16 ein mit diesem in Verbindung stehender vertikaler Kanal 41, der durch eine vertikale Trennwand 42 gebildet ist. Die Trennwand 42 geht am unteren Ende in ein horizontales, im wesentlichen rechteckiges und etwa bis zur Mitte des Flüssigkeitsbehälters 10 ragendes Podest 44 über, das eine Öffnung 46 enthält, welche das Innere des Flüssigkeitsbehälters 10 über einen Umlenkraum 48 mit dem Kanal 41 verbindet. In der Öffnung 46 ist ein Auflagering 50 mit einem Strebenkreuz 54 verankert.

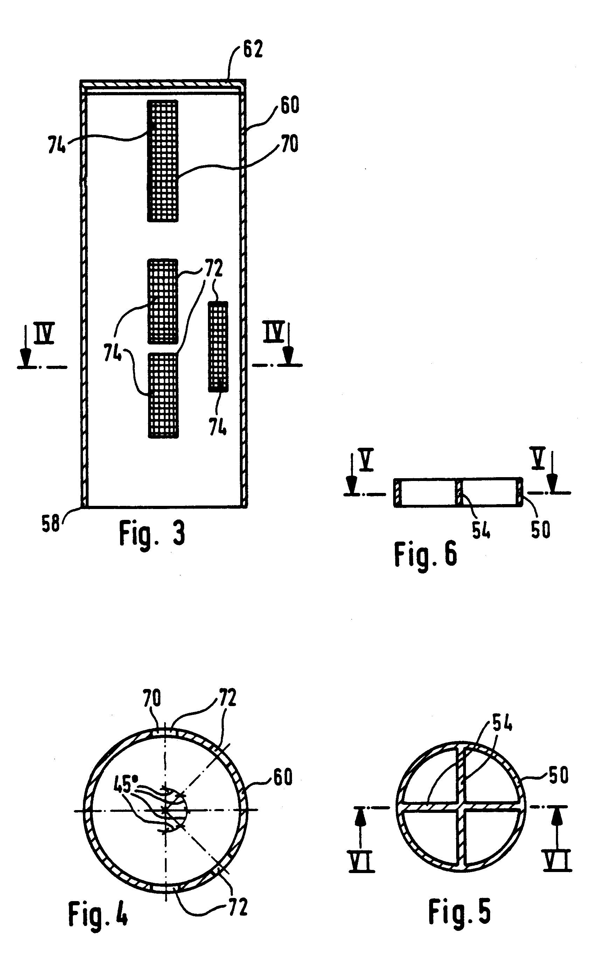

Auf der Oberseite des Podestes 44 ist ein Stellring 56 befestigt. Auf die Außenseite des Stellrings 56 ist das offene untere Ende 58 eines flüssigkeitsundurchlässigen zylindrischen Filtergehäuses 60 abnehmbar aufgesetzt. Das obere durch einen abnehmbaren Deckel 62 (siehe Fig. 3) verschlossene Ende des Filtergehäuses 60 wird durch einen mit der Trennwand 42 fest verbundenen kreisförmigen Haltebügel 64 in seiner Lage gehalten, wobei der Filterbehälter 60 jederzeit durch den Haltebügel 64 nach oben herausgezogen werden kann, wenn ein Einsatz 13 des Deckels 12 geöffnet ist. Das Wiedereinsetzen des Filtergehäuses 60 gestaltet sich sehr einfach, indem es einfach durch den Haltebügel 64 nach unten geschoben wird, bis das offene untere Ende 58 auf dem Stellring aufruht.

Im Inneren des Filtergehäuses 60 ist ein im wesentlichen zylindrisches und den Querschnitt des Filtergehäuses etwa ausfüllender Filter 66 aus koalierendem Material angeordnet, der nach oben unterhalb der sich abscheidenden Leichtflüssigkeitsschicht 22 endet. Der Filter 66 weist eine Mittelöffnung 68 von oben bis auf etwa 1/3 der Höhe des Filters auf, durch die koalierte Leichtflüssigkeit nach oben in die Schicht 22 aufsteigen kann. Über eine oder mehrere Öffnungen 70 steht das Innere des Filtergehäuses 60 mit dem Inneren des Flüssigkeitsbehälters 10 im Bereich des Flüssigkeitsspiegels 18 und der Leichtflüssigkeitsschicht 22 in Verbindung.

Auf der zur Trennwand 42 und zum Kanal 41 hinweisenden Seite weist das Filtergehäuse 60 in einem mittleren Höhenbereich desselben mehrere Eintrittsöffnungen 72 auf, durch die die zu reinigende Flüssigkeit nach dem Durchströmen einer längeren Strecke innerhalb des Flüssigkeitsbehälters 10 in das Filtergehäuse 60 eintritt. Anschließend durchströmt die Flüssigkeit den Filter 66 und tritt durch die Öffnung 46 und den Raum 48 in den Kanal 41 ein. Die eingezeichneten Pfeile zeigen in etwa die Strömungsrichtung an.

Wie aus Fig. 3 ersichtlich, sind die Öffnungen 70 und 72 jeweils mit feinmaschigem Drahtgewebe 74 abgedeckt, um das Eindringen von gröberen Verunreinigungen zu verhindern. Wie aus Fig. 4 ersichtlich, sind die Öffnungen 72 in etwa gleichmäßiger Anordnung über den zum Kanal 41 hinweisenden etwa halben Umfang des Filtergehäuses 66 verteilt.

Durch die Umlenkung der durch den Einlaß 14 eingeleiteten Flüssigkeit mittels des Stutzens 26 nach unten und die vom Filtergehäuse 60 wegweisende halbseitige Öffnung 30 am unteren Ende des Stutzens 26 wird die ins Innere des Flüssigkeitsbehälters 10 einströmende Flüssigkeit gezwungen, eine zunächst nach unten und dann wieder nach oben führende, im großen und ganzen durch die zylindrische Innenwand des Flüssigkeitsbehälters 10 etwa im Halbkreis geführte Strömung bis zu den Eintrittsöffnungen 72 des Filtergeäuses 60 auszuführen, was eine außerordentlich lange Aufenthaltszeit im Inneren des Flüssigkeitsbehälters 10 vor dem Eintritt in den Filter 66 ergibt. Das Abbremsen der Zulaufgeschwindigkeit durch den nach unten führenden Stutzen 26 und die strömungsgünstige Verteilung der zufließenden Flüssigkeit in horizontaler und vertikaler Richtung ergibt im Zusammenwirken mit der runden Form des Flüssigkeitsbehälters 10 und der Anordnung der Eintrittsöffnungen 72 eine so gute Ausnützung des zur Verfügung stehenden Raumes, daß nur ein sehr geringes Gesamtflüssigkeitsvolumen erforderlich ist. Durch die Form des Filters und dessen verhältnismäßig große Oberfläche sowie auch durch die Wahl des Filtermaterials, vorzugsweise offenporiger Polyurethanschaum, läßt sich insgesamt ein sehr niedriger Kohlenwasserstoffrestgehalt in dem durch den Kanal 41 und den Ablauf 16 abfließenden Wasser erreichen. Bereits bei der langen Aufenthaltszeit der Flüssigkeit im Flüssigkeitsbehälter vor dem Eintritt in den Filter ergibt sich eine hervorragende Trennung durch Aufschwimmen der Leichtflüssigkeitströpfchen. Auch durch die kaminartige Öffnung 68 können nach dem Koalierungsvorgang im Filter 66 angesammelte Tröpfchen nach oben in die Schicht 22 aufsteigen.

Durch die geschilderte Führung der Flüssigkeitsströmung entsteht im Abscheider eine Ruhezone nahe dem Flüssigkeitsspiegel 18, in der sich die Leichtflüssigkeit zu der Schicht 22 ansammeln kann. Es wird ferner vermieden, daß eine sog. Kurzschlußströmung entsteht, bei der das Gemisch ohne Durchströmung des Filters in den Ablauf gelangen könnte.

Auch die Streben 34 am unteren Ende des Stutzens 26 dienen zur weiteren Verteilung der einlaufenden Flüssigkeit und zur Erhöhung der Aufenthaltszeit.

Die Form des Filters ist relativ hoch im Verhältnis zum Durchmesser. Er endet jedenfalls unterhalb der Leichtflüssigkeitsschicht 22, so daß im Zusammenwirken mit der Kaminwirkung der Mittelöffnung 68 ein Zusetzen des Filters durch Öl oder dgl. wirksam verhindert wird.

Da das Wasser nach unten abläuft, werden koalierende Leichtflüssigkeitströpfchen nicht ins Ablaufwasser mit hineingezogen.

Wie oben erwähnt, können sowohl Filtergehäuse 60 als auch Filter 66 sehr leicht nach Abnehmen der jeweiligen Deckel 12 bzw. 62 mit einfachen Handgriffen und ohne Einsteigen in den Abscheider zu Reinigungszwecken herausgenommen und wieder eingesetzt werden. Der Filter steht nach dem Einsetzen ohne besondere Befestigungsvorrichtung sicher im Filtergehäuse.

**Patentansprüche**

1. Koaleszenzabscheider mit einem Einlauf (14) und Ablauf (16) aufweisenden Flüssigkeitsbehälter (10), wobei Einlauf (14), Ablauf (16) und der Flüssigkeitsspiegel (18) im Flüssigkeitsbehälter (10) sich in etwa gleicher Höhe befinden, wobei im Abstand unterhalb von Einlauf (14) und Ablauf (16) ein für Leichtflüssigkeit koalierend wirkender Filter (66) angeordnet ist, der von der durch den Einlauf zugeführten Flüssigkeit (20) durchströmt wird, so daß sich eine vom Flüssigkeitsspiegel (18) nach unten wachsende Leichtflüssigkeitsschicht (22) bildet, wobei der Ablauf (16) über einen vertikalen Kanal (41) mit dem unteren Ende des Filters (66) verbunden ist, wobei der Filter (66) eine vertikal langgestreckte Form besitzt und von einem mit Eintrittsöffnungen für die Flüssigkeit versehenen Filtergehäuse (60, 60a) umumfaßt ist, dessen Querschnitt einem Bruchteil des Querschnitts des Flüssigkeitsbehälters (10) entspricht, das im Flüssigkeitsbehälter (10) nahe dem vertikalen Kanal (41) angeordnet ist und über sein unteres Ende (58) mit dem Kanal (41) in Verbindung steht, und wobei an den Einlauf (14) ein nach unten führender Stutzen (26) anschließt, der eine in den Flüssigkeitsbehälter (10) mündende Öffnung (30) aufweist, dadurch gekennzeichnet, daß das Filtergehäuse (60) flüssigkeitsdicht ausgebildet ist sowie auf der dem Kanal (41) zugewandten Hälfte seines Umfanges sich über einen mittleren Höhenbereich erstrekkende Eintrittsöffnungen (72) für die Flüssigkeit und etwa in Höhe von Einlauf (14) und Ablauf (16) eine Verbindungsöffnung (70) aufweist, wobei der Stutzen (26) etwa in Höhe der Eintrittsöffnungen (72) des Filtergehäuses (60) in den Flüssigkeitsbehälter (10) mündet.

2. Koaleszenzabscheider nach Anspruch 1, dadurch gekennzeichnet, daß der Stutzen (26) eine nach unten und seitlich von dem Filtergehäuse (60) weg gerichtete Mündungsöffnung (30) in den Flüssgkeitsbehälter (10) aufweist.

3. Koaleszenzabscheider nach Anspruch 1 oder 2, dadurch gekennzeichnet, daß das Filtergehäuse (60) herausnehmbar in eine behälterfeste Halteeinrichtung (64) eingesetzt ist.

4. Koaleszenzabscheider nach Anspruch 3, dadurch gekennzeichnet, daß das offene untere Ende (58) des Filtergehäuses (60) auf einen behälterfesten Stellring (58) aufgesetzt ist.

5. Koaleszenzabscheider nach einem der vorangehenden Ansprüche, dadurch gekennzeichnet, daß der Filter (66) in seinem oberen Abschnitt eine mittige Öffnung (68) enthält, die sich von oben bis auf etwa 1/3 der Höhe des Filters (66) erstreckt.

6. Koaleszenzabscheider nach einem der vorangehenden Ansprüche, dadurch gekennzeichnet, daß das Filtergehäuse (60, 60a) über Einlauf (14) und Ablauf (16) nach oben ragt und einen abnehmbaren Deckel (62) aufweist.

7. Koaleszenzabscheider nach einem der vorangehenden Ansprüche, dadurch gekennzeichnet, daß der Flüssigkeitsbehälter (10) im wesentlichen zylindrisch ausgebildet ist.

8. Koaleszenzabscheider nach einem der vorangehenden Ansprüche, dadurch gekennzeichnet, daß am unteren Ende des Stutzens (26) die Flüssigkeitsströmung verteilende Querstreben (34) angeordnet sind.

9. Koaleszenzabscheider nach einem der vorangehenden Ansprüche, dadurch gekennzeichnet, daß der Filter (66) unterhalb der maximalen Schicht (22) der Leichtflüssigkeit endet.

**Claims**

1. A coalescence separator having a liquid tank (10) having an inlet (14) and an outlet (16), the inlet (14), the outlet (16) and the liquid level (18) in the liquid tank (10) being disposed at substantially the same height, and disposed at a distance below the inlet (14) and outlet (16) is a filter (66) which has a coalescing action for light liquid and through which liquid (20) supplied via the inlet flows so that a light liquid layer (22) is formed which increases downwardly from the liquid level (18), the outlet (16) being connected via a vertical channel (41) to the bottom end of the filter (66), the filter (66) having a vertically elongate shape and being engaged around by a filter casing (60, 60a) which is formed with entry openings for the liquid and which has a cross-section corresponding to a fraction of the cross-section of the liquid tank and which is connected via its bottom end (58) to the channel (41), the inlet (14) being adjoined by a downwardly extending spigot (26) formed with an opening discharging into the liquid tank (10), characterized in that the filter casing (60) is constructed liquid-tight and is formed in the half of its periphery adjacent the channel (41) with entry openings extending over a central zone of the height for the liquid and with a connecting opening (70) substantially at the height of the inlet (14) and outlet (16), the spigot (26) discharging into the liquid tank (10) substantially at the height of the entry openings (72) of the filter casing (60).

2. A coalescence separator according to claim 1, characterized in that the spigot (26) has a discharge opening (30) into the liquid tank (10) which is directed downwardly and laterally away from the filter casing (60).

3. A coalescence separator according to claims 1 or 3, characterized in that the filter casing (60) is inserted removably into a retaining means (64) attached to the tank.

4. A coalescence separator according to claim 3, characterized in that the open bottom end (58) of the filter casing (60) is fitted on to an adjusting ring (58) attached to the tank.

5. A coalescence separator according to one of the preceding claims, characterized in that the upper portion of the filter (66) is formed with a central opening (68) which extends downwards to substantially 1/3 of the height of the filter (66).

6. A coalescence separator according to one of the preceding claims, characterized in that the filter casing (60, 60a) extends upwardly beyond the inlet (14) and outlet (16) and has a removable cover.

7. A coalescence separator according to one of the preceding claims, characterized in that the liquid tank (10) is substantially cylindrical.

8. A coalescence separator according to one of the preceding claims, characterized in that cross-struts (34) distributing the liquid flow are disposed at the bottom end of the spigot (26).

9. A coalescence separator according to one of the preceding claims, characterized in that the filter (66) terminates below the maximum layer (22) of the light liquid.

## Revendications

1. Séparateur à coalescence comprenant un réservoir à liquide (10) avec une entrée (14) et une sortie (16), l'entrée (14), la sortie (16) et le niveau de liquide (18) dans le réservoir à liquide (10) se situant sensiblement à la même hauteur et à une certaine distance en-dessous de l'entrée (14) et de la sortie (16) il est prévu un filtre (66) à effet de coalescence pour le liquide léger, ce filtre étant traversé par le liquide (20) introduit par l'entrée de manière à former une couche de liquide léger (22) qui descend à partir du niveau de liquide (18) et la sortie (16) est reliée à l'extrémité inférieure du filtre (66) par un canal vertical (41), le filtre (66) ayant une forme allongée dans la direction verticale et étant entouré par un boîtier de filtre (60) muni d'orifices d'entrée pour le liquide, boîtier dont la section correspond à une fraction de la section du réservoir à liquide (10) et qui est placée dans le réservoir (10) au voisinage du canal vertical (41) en étant relié au canal (41) par son extrémité inférieure (58), l'entrée (14) étant prolongée par un manchon (26) dirigée vers le bas et comportant un orifice (30) débouchant dans le réservoir à liquide (10), séparateur caractérisé en ce que le boîtier de filtre (60) est étanche au liquide et comporte sur la moitié de sa périphérie tournée vers le canal (41), des orifices d'entrée (72) pour le liquide, s'étendant sur la zone de hauteur moyenne, ainsi qu'un orifice de liaison (70) situé sensiblement à la hauteur de l'entrée (14) et de la sortie (16), le manchon (26) débouchant dans le réservoir (10) sensiblement à la hauteur des orifices d'entrée (72) du boîtier de filtre (60).

2. Séparateur à coalescence selon la revendication 1, caractérisé en ce que le manchon (26) comporte un orifice de sortie (30) débouchant dans le réservoir à liquide (10) dans sa partie inférieure, cet orifice étant dirigé dans le sens s'éloignant du boîtier de filtre (60).

3. Séparateur à coalescence selon les revendications 1 ou 2, caractérisé en ce que le boîtier de filtre (60) est placé de manière extractible dans un dispositif de maintien (64) solidaire du réservoir.

4. Séparateur à coalescence selon la revendication 3, caractérisé en ce que l'extrémité inférieure (58) ouverte du boîtier de filtre (60) est engagée sur une bague de positionnement (58) solidaire du réservoir.

5. Séparateur à coalescence selon l'une des revendications précédentes, caractérisé en ce que le filtre (66) comporte un orifice centrale (68) dans son segment supérieur et cet orifice s'étend à partir du haut sur environ 1/3 de la hauteur du filtre (66).

6. Séparateur à coalescence selon l'une des revendications précédentes, caractérisé en ce que le boîtier de filtre (60) comporte une entrée (14) et une sortie (16) tournées vers le haut et un couvercle amovible (62).

7. Séparateur à coalescence selon l'une des revendications précédentes, caractérisée en ce que le réservoir à liquide (10) est de forme essentiellement cylindrique.

8. Séparateur à coalescence selon l'une des revendications précédentes, caractérisé par des entretoises (34) de distribution de l'écoulement du liquide à l'extrémité inférieure du manchon (26).

9. Séparateur à coalescence selon l'une des revendications précédentes, caractérisé en ce que le filtre se termine en-dessous de la couche maximale (22) du liquide léger.

**Fig. 1**

**Fig. 2**

62

74

60

70

74

72

74

IV

IV

72

74

**Fig. 3**

58

V

V

54

50

**Fig. 6**

70

72

45°

60

72

**Fig. 4**

54

50

VI

VI

**Fig. 5**